# EUROPEAN PATENT APPLICATION

(11) **EP 4 815 352 A1**
(43) Date of publication of application: **30.09.2026**
(21) Application number: 25382310.8
(22) Date of filing: 28.03.2025
(51) Int. Cl.: H04L 1/00, H04L 1/06, H04L 9/00, B61L 15/00, B61L 27/70

(54) **MOBILE-DEVICE FOR DATA COMMUNICATION AT A DESIRED SAFETY INTEGRITY LEVEL**

(71) Applicant: Siemens Rail Automation S.A.U., 28760 Tres Cantos (Madrid) (ES)
(72) Inventor: Garcia Esteban, Hector, 19005 Guadalajara (ES); Muñoz Muñoz, Jose Luis, 28821 Coslada (Madrid) (ES)
(74) Representative: Siemens Patent Attorneys

(57) **Abstract**

The invention pertains to a mobile-device (10) for data communication at a desired safety integrity level with components of a lower safety integrity level, the mobile-device (10) comprising:
- a sending-unit (11) designed for sending a control-dataset (C) from the mobile-device (10) to a receiving device,
- a receiving-unit (12) designed for receiving multiple data-entities (D1, D2) of a dataset (D) over different transmission-channels (5a, 5b),
- a comparison-unit (13) designed for cross-checking received data-entities (D1, D2), wherein a cross check is positive in the case that the data-entities (D1, D2) are checked to originate from the dataset (D)
- an output-unit (14) designed for outputting information based on a received data-entity (D1, D2) of a dataset (D) after a positive cross-check.

Furthermore, the invention describes a system and a method.

## Description

### Technical Field

The invention describes a mobile-device for data communication at a desired safety integrity level, a system for transmitting data at a desired safety integrity level and a method for transmitting data.

### Background Art

When data is transmitted or processed, errors may occur, i.e. concerning a dataset, bits of the dataset may be changed, get lost or appear. Especially in the field of controlling this may lead to failures that could be fatal. There are various procedures needing different resources that could be used for reducing errors when handling datasets. Roughly said, the less errors are desired, the more effort is necessary.

Errors could be quantified, especially also by respecting their relevance on the environment. This quantification could be provided as a probability of a defective dataset after handling. It has been established that some applications have a certain safety integrity levels (SIL) indicating a maximum error-probability or an interval of error-probabilities. Often, there are certain different SILs defining failure-intervals.

Typically, there are four SILs (SIL-1, SIL-2, SIL-3 and SIL-4) with increasing safety requirements. Concerning the measures "Probability of dangerous Failure on Demand" (PFD), "Probability of dangerous Failure per Hour" (PFH), and "Tolerable Functional Failure Rate" (TFFR) well-known in the art, the typical levels are:
SIL1: 10⁻² ≤ PFD < 10⁻¹ and 10⁻⁶ ≤ PFH < 10⁻⁵ and 10⁻⁶ ≤ TFFR < 10⁻⁵,
SIL2: 10⁻³ ≤ PFD < 10⁻² and 10⁻⁷ ≤ PFH < 10⁻⁶ and 10⁻⁷ ≤ TFFR < 10⁻⁶,
SIL3: 10⁻⁴ ≤ PFD < 10⁻³ and 10⁻⁸ ≤ PFH < 10⁻⁷ and 10⁻⁸ ≤ TFFR < 10⁻⁷,
SIL4: 10⁻⁵ ≤ PFD < 10⁻⁴ and 10⁻⁹ ≤ PFH < 10⁻⁸ and 10⁻⁹ ≤ TFFR < 10⁻⁸.

It is especially a problem that nowadays the procedures defined for executing safety-related works in the field involve a lot of human intervention to ensure their integrity, which causes that the procedures are slow, and potentially human-driven errors can occur. For example, in order to perform vital safety functions (typically SIL4) from railway operator workstations, safety procedures are required to achieve the required SIL by exporting risks to the human operators, since the operator shall cross-check all the information shown which can provoke human errors. This problem is currently solved by exporting vital actions to the operators when performing safety functions through the workstations based on several checks (e.g. the needs to ensure different graphical information's and decide if the vital commands can be executed/confirmed - 100% operator responsibility).

The problem is currently solved by exporting risks to the human beings involved in the execution of the safety-related works, where vital protections can be established from vital equipment, but no vital indications nor actions can be performed by the personnel in the field executing the work.

### Summary of Invention

It is the object of the present invention to improve the known systems and methods and provide a mobile-device for data communication at a desired safety integrity level, a system for transmitting data at a desired safety integrity level and a method for transmitting data, for overcoming the above described problems.

This object is achieved by a mobile-device, a system, and a method according to the independent claims.

A mobile-device according to the invention serves for data communication at a desired safety integrity level with components of a lower safety integrity level. The mobile-device comprises the following components:
- optionally, a sending-unit designed for sending a dataset (could be designated as or named "control-dataset") from the mobile-device to a receiving device,
- a receiving-unit designed for receiving multiple data-entities of a dataset over different transmission-channels,
- a comparison-unit designed for cross-checking received data-entities, wherein a cross check is positive in the case that the data-entities are checked to originate from the dataset,
- an output-unit designed for outputting information based on a received data-entity of a dataset after a positive cross-check.

The mobile-device could especially be used by workers while working on a railroad track. However, it generally could be used in all technical fields where a high safety integrity level (SIL) is needed for data communication with components of a lower safety integrity level than desired. For example, for said workers working on a railroad track, it is essential that they are informed about an incoming train. When a train is approaching the point of construction, any errors indicating that there is no incoming train would be fatal. Thus, for the transmission of a message of a wayside equipment (a device monitoring trains) SIL4 is needed. However, in the case there are only transmission-channels having lower SIL, e.g. SIL2, SIL4 cannot be guaranteed for any data sent over any of such transmission-channels.

The mobile-device according to the invention could solve this issue with its comparison-unit. The mobile-device preferentially comprises a sending-unit, a receiving-unit, said comparison-unit and an output-unit. Preferentially, checking if data-entities originate from the dataset means notably to compare said data-entities in order to determine whether they represent a true or correct copy of the original source of information, i.e. of the dataset. If the comparison of the data-entities indicates a divergence, then at least one of the data-entities is not a correct or true copy of the dataset, and the data-entities should be then preferentially discarded, and said data-entities newly sent to the receiving unit. Thus data-entities originate from the dataset if the information comprised in each of said data-entities is considered as identical to the original information, i.e. to the information that was comprised in the dataset, which is assumed to be the case if the data-entities comprise or encode no divergent information (or comprise or encode identical information).

The basic principle of the invention lies in the comparison of identical entities of the dataset (copies / HASH-values). These "data-entities" are either copies of the dataset or HASH-values of the dataset (or of a copy) or any other data construct that resembles the data of the dataset, e.g. a "container" comprising a copy of the dataset plus additional data. It is preferred that at least one copy of the dataset is sent to the mobile-device, i.e. here: received by the mobile-device. Speaking about a "dataset" and a "copy", there is actually no difference concerning the pure data. By transmitting a dataset, there is in fact always sent a copy of this dataset every time, since the initial data stays in the RAM and one copy is sent bit by bit. In short: a "data entity" resembles the information of the dataset or its HASH.

It could be assumed that the dataset comprises an important information that could be a text message, but also graphical information or a data-code. For example, it could be an information whether a train is approaching on a railroad track or not.

The receiving-unit is used for receiving the data-entities of the dataset (copies and/or HASH-values, wherein at least one copy should be received) over different transmission-channels. Data-transfer is well known in the art. Also multiple different transmission-channels are known. There could be used transmission-channels of a different type (e.g. a terrestrial data-network and satellite data transfer) or there could be used paths over different servers in one single data network.

As indicated above, since it is particularly preferred to display received information on the mobile-device, it is preferred that at least one copy is sent and received by the mobile-device. However, instead of a (further) copy, there could also be sent and received HASH-values of the dataset. The HASH-value is a long number being as-good-as unique for every copy. However, the HASH-value could be less data than the copy itself so that it could be faster and more effective to send HASH-values instead of copies. Thus, it is preferred, when N (e.g. two) different transmission-channels should be used, to send at least one copy. When a HASH-value is received, the mobile-device should preferably be designed to calculate the HASH-value from a received copy so that the HASH-values could be compared.

The received data-entities are cross-checked with the comparison-unit. In the course of this cross-check, copies and/or HASH-values as the data-entities are checked to originate from identical data. This means that received copies of a dataset are compared with other received copies of this dataset and/or received HASH-values of a dataset are compared with other HASH-values of this dataset received directly or calculated from a received copy, notably to determine if they comprise the very same information, in which case the cross check is positive, otherwise the cross check is negative.

After a positive cross-check, i.e. when it has been proven that the received data-entities (copies or HASH-values) originate from the same dataset, the output-unit outputs information based on a received copy of a received dataset after a positive cross-check. This can be done by displaying the content of the copy and/or by interpreting or processing the information of the copy first and then output information based on the data of the copy. Preferentially, the cross-check is positive if the received data-entities originate from the same dataset and comprise the same (identical) information as the dataset from which they originate. Concerning the example of railroad works, a preferred output are status indications and alarms from controlled field devices and trains, especially positions of trains on the track.

The sending-unit is used for sending a dataset from the mobile-device to a receiving device, e.g. in order to control that other device. This dataset could be addressed as "control-dataset" in order to indicate that it originates from the mobile-device, however, it is not absolutely necessary that this dataset comprises control data. It could also comprise information data like text messages or images. Thus, with "control-dataset" a dataset is meant that is sent from the mobile-device and could comprise control data and/or other data. Down below this possibility is further explained.

The mobile-device could use an environment with a lower SIL in order to get information with a desired target-SIL, e.g. SIL4. When a process with a certain probability p of failure is done N times and when the N results are checked for failures (no defective copy is allowed), then the resulting probability of failure is p^{N}. Thus. for example, if two copies of a dataset are transmitted over two transmission-channels with a SIL of SIL2, then after comparing the datasets (no error found) the total SIL is SIL4. Or more detailed: The probability that both datasets are identically defective is in the interval of SIL4. Thus, the comparison-unit provides the desired target-SIL.

A system according to the invention serves for transmitting data at a desired safety integrity level with components of a lower safety integrity level. The system comprises the following components:
- a mobile-device according to the invention comprising a sending-unit, a receiving-unit, said comparison-unit and an output-unit,
- an information-device comprising at least a dataset-unit having a predefined target-SIL and designed for providing datasets to be transmitted to the mobile-device,
- a transmission-system comprising at least two different transmission-channels and being designed for transmitting at least two data-entities of datasets over the at least two different transmission-channels.

The mobile-device acts advantageously as a component in this system. Besides the mobile-device (or a plurality of mobile-devices) the system comprises the information-device for providing information that could be displayed by the mobile-device(s) and the transmission-system to transmit the information to the mobile-device(s).

The information-device comprises at least a dataset-unit having a predefined target-SIL and designed for providing datasets to be transmitted to the mobile-device. The information-device could be a combination of the dataset-unit and a data interface designed to send data-entities of a dataset over the transmission system to a mobile-device. However, the information-device may have a more complex structure and the dataset-unit may be a device among others, possibly among other dataset-units.

For a good understanding one could imagine that there is a railroad track with several devices of wayside equipment. This wayside equipment represents train interface equipment usually maintained and operated by the railroad and usually physically located at or near a grade crossing. It is a source and destination for information for, or about, approaching trains. Wayside equipment provides data about the time at which a train will arrive and/or the time a train will take to clear a crossing and/or data about a crossing status and/or warnings. An information-device may comprise several such devices of wayside equipment as dataset-units. Then, the information-device has devices, e.g. servers, that process the data of the dataset-units and manage data-communication, e.g. which working crew at which section of the railroad track should be warned by which wayside equipment. The information-device may also comprise means for sending this data over two different transmission-channels of the transmission-system to the mobile-device. The information-device may also be designed to receive data from mobile-devices in order to control its devices or elements of its devices. How a high SIL could be reached in the information-device is explained below.

It should be noted that there should at least be sent two copies of the dataset or at least one copy and one HASH-value of the dataset over the transmission-system.

The transmission-system comprises at least two different transmission-channels. This has already been addressed above: the transmission-channels may be of the same type or of different types, however, there must be two different pathways for the data-entities. It could have means that receive a dataset and decide over which transmission-channel which data-entity is sent to the mobile-device. However, it could also provide two or more transmission-channels and the dataset could be managed by the information-device.

An encryption of the transmitted data is advantageous. Thus, the system is preferably designed for encrypting the data-entities before transmission and to decrypt them after transmission. Thus, it is preferred that the information-device or the transmission-system is designed for encrypting data-entities and the mobile-device is designed to decrypt data-entities encrypted by the information-device or the transmission-system.

In order to define the number of copies to be sent, it is preferred that a target-SIL is defined. This target-SIL is the desired SIL for a process. In the following, it could be assumed that the target SIL is SIL4, however, also SIL1, SIL2 and SIL3 could be target-SILs. In the case the SIL of the transmission-channels has a maximum value of p_{H} and the target-SIL has a maximum value of p_{T}, then the number of copies n should be n ≥ log(p_{H}/p_{T}).

The devices of the information-device and the transmission-system do not need to have the target-SIL. In fact, the mobile-device according to the invention is meant to handle data with a lower SIL and still reach the target-SIL. The devices of the information-device and the transmission-system do not even need to have the same SIL, this could be compensated by the number of data-entities. It is preferred that at least the dataset-unit(s) should have the target-SIL, wherein it is also possible that multiple dataset-units are used at one location and their datasets are also compared to produce datasets with the target-SIL.

After transmission, a cross-check of the data-entities is realized by the mobile-device that received the data-entities as already described above. Regarding copies as data-entities, it is checked, whether the copies are identical or not. Regarding a HASH-value as one data-entity, there could be calculated the HASH-value of another received copy and compared with the received HASH-value for identity. Originating from the same dataset, the data-entities should be identical after transmission.

There is a possibility that a data-entity is altered in an unwanted manner due to the transmission. For example, bits of a data-stream could change their values, they could get lost or unwanted bits appear due to ripples in the signal. However, any error leaves a trace in the altered data-entity, not the other(s). Additionally, concerning relatively long datastreams, the probability that the same bits of two data-entities are affected by errors is near zero. Thus, when both data-entities are identical, then the transmission was ok, if not, then there was an error during transmission or in the information-device or during cross-checking, and it is preferred that the transmission should be repeated until the data-entities are identical.

The cross-check should be done with a unit certified for the target-facility. However, it could also be done with several units certified for lower SIL, wherein the result of the several cross-checks should be compared with a unit certified for the target-SIL. It should be noted that the outcome of such unit could be a boolean, only (identical or not) and a certain SIL-certification is much more easy for processes that compare only a few boolean expressions.

However, after the cross-check, the PFD as well as the PFH/TFFR are in a higher SIL than each of the handling channel had. If the handling channels were certified for SIL2, then the SIL of the result is SIL4.

In short, the cross-check involves a thorough comparison of the dataset copies after they have been subjected to different handling processes. The goal is to ensure that despite the variations in handling, the core integrity of the data remains consistent.

In the case, the data-entities are identical, a copy of the dataset is outputted. Thus, if the cross-check confirms that all data-entities of the dataset are identical, then the transmitted data of the dataset is outputted for further use. For example, the data could be displayed on the mobile device, e.g. "train arriving" or "free track".

A method according to the invention serves for transmitting data with a system according to the invention. The method comprises the following steps:
- providing a dataset (from the dataset-unit and/or from the mobile-device) to be transmitted,
- transmitting at least one copy of this dataset and another copy or a HASH-value of this dataset as data-entities over the transmission-system of the system,
- cross-checking the data-entities after transmission, wherein a cross check is positive in the case that the data-entities are checked to originate from identical data,
- if the cross-check is positive: outputting information of a data-entity of the dataset, e.g. of at least one of said data-entities of the dataset.

The method has already been described above. The dataset is provided by the dataset-unit that may be wayside equipment of a railroad track for example. In order to receive the desired information on the mobile device, it is not preferred to send HASH-values, only, but at least one copy of the dataset. If a HASH-value is transmitted, then there should be calculated a HASH-value from a received copy (of the same dataset the HASH-value is calculated) and the HASH-values should be compared. It should be noted, that there may be used components with a lower SIL than the target-SIL due to the cross-check. However, it is advantageous when the cross-check has a SIL4. There should be an output only when the cross-check is positive. If not, the transmission should be repeated or a warning should occur on the mobile device.

The advantage of this invention is that commercial off-the shelf handheld devices could be modified according to the invention to be used as mobile-devices for the system according to the invention with a total SIL4 security. The information of the dataset-unit could be displayed to a user graphically and/or as text. When cross-checks are performed based on HASH-values, excessive exchange of graphical information could be avoided. Thus, SIL4 display information could be reached with hardware and software components having SIL2 that are cheaper than SIL4-components and commercial off-the shelf components could be used for critical operations.

### Description of Embodiments

Particularly advantageous embodiments and features of the invention are given by the dependent claims, as revealed in the following description. Features of different claim categories may be combined as appropriate to give further embodiments not described herein.

According to a preferred mobile-device, the sending-unit is designed for sending multiple data-entities of a dataset (could be designated as "control-dataset") over different transmission-channels, especially the same transmission-channels, that are connected with the receiving-unit. This allows to cross-check data from the mobile device, e.g. by the information-device of the system, in order to enhance the SIL of messages or control data from the mobile-device. In this case, the information-device also has a comparison-unit designed for cross-checking incoming data. The data-entities could be copies of a dataset as well as HASH-values of this dataset, wherein it is preferred that at least one copy is sent.

According to a preferred mobile-device, the comparison-unit is designed for cross-checking all received data-entities of a dataset by comparing data-entities, whether they originate from identical data or not, wherein in the case two data-entities differ (i.e. data of these copies or their HASH-values is corrupt), it is decided that the target-SIL is not reached. This means, when at least one bit is not identical when comparing two copies or two HASH-values, then there is no positive cross-check. It is preferred that the comparison-unit is designed for generating a HASH-value of a received copy and for comparing this generated HASH-value with at least one other HASH-value that has been received or generated from another received copy. This has already been addressed above. It is clear that HASH-values could only be compared with other HASH-values. These HASH-values must be received or calculated from copies. When there are three or more different data-entities of the same dataset, any data-entity should be compared with any other data-entity or all data-entities should be compared with each other. Thus, when one data-entity is a HASH-value and one other data-entity is a copy, then the HASH-value of this copy should be calculated and compared with other HASH-values in any case, even if two or more HASH-values and several copies have been received.

A preferred mobile-device is designed for generating two identical datasets with two different generation-routines and transmitting these two datasets (as data-entities) with the sending-unit, especially over two different transmission-channels. This enhances SIL. It should be noted that even the generation of the two identical datasets could be prone to errors. When the mobile device has SIL2, then errors of each generated dataset is SIL2. When two datasets are generated with two different generation-routines (each SIL2) and transmitted over two different transmission-channels (each SIL2), then by cross-checking the received datasets (in the information-unit), the SIL can be enhanced even to be SIL4.

A preferred mobile-device is designed for processing received data such that in the case this data originates from wayside equipment of a railroad track and comprises graphical data, graphical data and text-data comprising information of the wayside equipment is output on the output-unit. Typical information sent by the wayside equipment are status indications and alarms from controlled field devices and trains, especially positions of switches, aspect of signals, position of the trains, or blocked track elements.

According to a preferred system, the information-device comprises a further comparison-unit designed for cross-checking multiple data-entities, especially two datasets, sent by the sending-unit of the mobile-device after their transmission. This cross-check could provide a higher SIL for data sent from the mobile-device. This issue has already been addressed above. It preferably works like the comparison unit of the mobile-device.

It is preferred that the further comparison-unit is designed for cross-checking all received data-entities of a dataset by comparing the data-entities, whether they originate from identical data or not, wherein in the case two data-entities differ, it is decided that the target-SIL is not reached. It is particularly preferred that the further comparison-unit is designed for generating a HASH-value of a received copy and for comparing this generated HASH-value with at least one other HASH-value that has been received or generated from another received copy.

According to a preferred system, the dataset-unit comprises a monitoring-unit with the target-SIL designed to monitor its environment and generating a dataset comprising information about monitored issues. This monitoring unit may comprise a sensor or any other hardware that is able to measure a parameter of the environment. The dataset could comprise raw-data measured from the environment, e.g. images, video-files or measured data, or it could comprise pre-processed data. It is preferred that the dataset-unit is designed for monitoring a railroad track and/or comprises a wayside equipment. For example, the dataset may comprise information whether a train is arriving or not.

A preferred system is designed such that a dataset transmitted from the mobile-device is used for controlling the information-device, especially the dataset-unit. This dataset could especially be used for controlling the generation of datasets by the dataset-unit. For example, a user may amend preferences of the dataset-unit in order to get more or less information about wayside equipment. When working at a moving construction-yard at a railroad track, it could be advantageous to control the wayside equipment such that always the correct part of the railroad track is monitored.

A preferred system is designed for encrypting the data-entities before transmission and to decrypt them after transmission. This enhances security of the data transmission. It is preferred that the information-device or the transmission-system is designed for encrypting data-entities and the mobile-device is designed to decrypt data-entities encrypted by the information-device or the transmission-system. Alternatively or additionally, it is preferred that the mobile-device is designed for encrypting data-entities and the information-device or the transmission-system is designed to decrypt data-entities encrypted by the mobile-device.

According to a preferred system, the information-device comprises at least two server-units, preferably having a SIL lower than the target-SIL, connected such that they can receive data (a dataset) from the dataset-unit and send data (e.g. control data) to the dataset-unit. The system preferably also comprises a comparison-unit designed to cross-check datasets from the servers that are based on one dataset of the dataset-unit. This could enhance SIL of the information-device without the need for the server-units to have the target-SIL. It is preferred that the system is designed such that at least one server-unit transmits a copy or a HASH-value to the mobile device.

A preferred system comprises a human-machine-interface that could be part of the information-device or an individual device. The system is designed such that the dataset-unit and/or servers connected with the dataset unit could be controlled by the human-machine-interface. It is preferred that the system is designed such that a dataset of the dataset-unit is sent to the human-machine-interface, and the human-machine-interface is designed to display a dataset received from the dataset-unit.

According to a preferred method, data-entities of a dataset are sent to the mobile-device and cross-checked by the mobile-device. Preferably, also a number of data-entities of a dataset are sent from the mobile-device and in the case multiple data-entities are sent, they are preferably cross-checked by a further comparison-unit (in order to enhance SIL).

According to a preferred method, the dataset-unit of the system monitors the existence of a train at a predefined position of a railroad track. This method comprises the steps:
- generating a dataset comprising information about the existence of a train at the predefined position of the railroad track,
- transmitting at least one copy of this dataset and another copy of this dataset or a HASH-value of the dataset as data-entities to the mobile-device,
- cross checking the received data-entities by the mobile-device,
- in the case of a positive cross-check: displaying information based on the received data-entities on the mobile-device preferably comprising the steps:
- transmitting a dataset from the mobile-device to the dataset-unit,
- controlling the dataset-unit with data transmitted from the mobile-device to the dataset-unit.

### Brief Description of the Drawings

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a system for transmitting data at a desired safety integrity level according to the state of the art.
Figure 2 shows an example for a system for transmitting data at a desired safety integrity level with a mobile device according to the invention.
Figure 3 shows an example for an application for a system according to the invention.
Figure 4 shows an example for a method according to the invention.

### Description of Examples

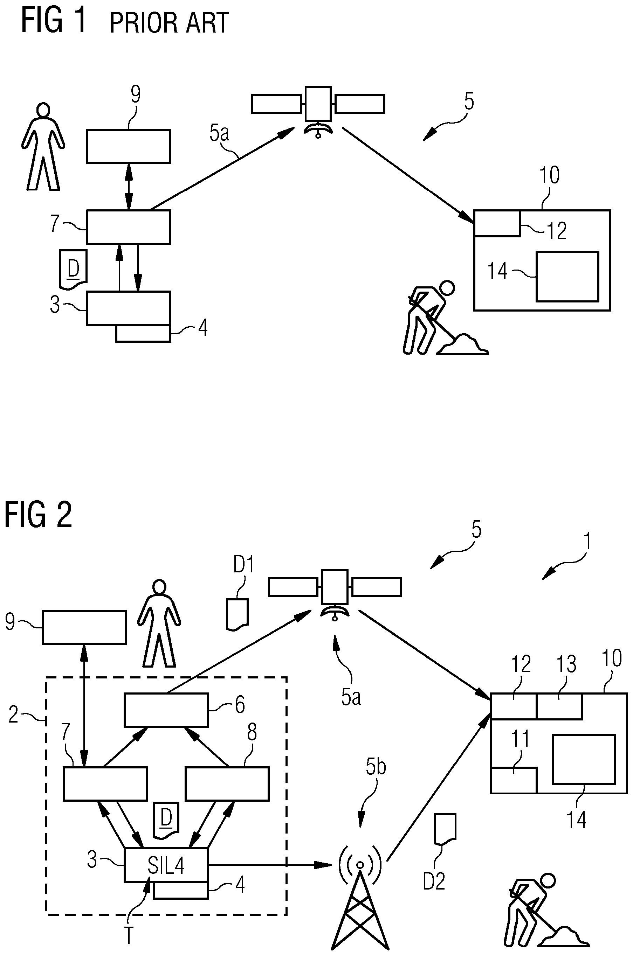

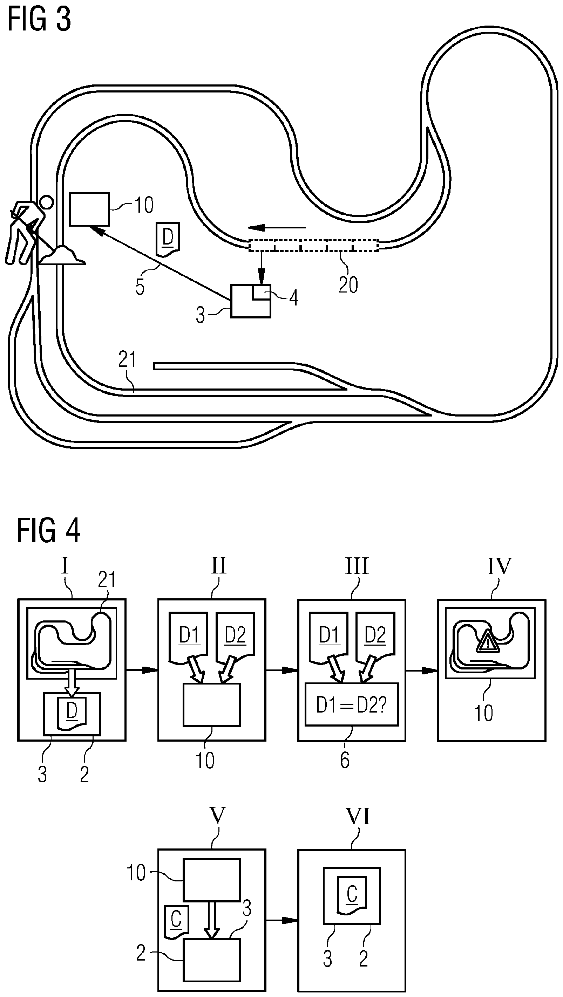

Figure 1 shows a system for transmitting data at a desired safety integrity level according to the state of the art. A dataset D is generated by a dataset-unit 3 (SIL4) that comprises a monitoring-unit 4 (SIL4), e.g. wayside equipment monitoring a railroad track 21 (see e.g. figure 3). The dataset D is then processed by a server-unit 7 (SIL4) that can also be used to control the dataset-unit 3 and that is communicating with a human-machine-interface 9. The dataset D is then sent over a transmission-channel 5a of a transmission system 5 to a mobile-device 10 having a receiving unit 12 and an output unit 14 (e.g. a display) showing information about a received dataset D.

All relevant components transmitting the dataset D must have a high safety integrity level (SIL) in order to accurately provide data without any errors (in the range of the SIL).

Figure 2 shows an example for a system 1 for transmitting data at a desired safety integrity level (target-SIL T) with a mobile-device 10 according to the invention. The system 1 comprises the mobile-device 10, an information-device 2 comprising at least a dataset-unit 3 having a predefined target-SIL T (SIL4) and designed for providing a dataset D to be transmitted to the mobile-device 10 and a transmission-system 5 comprising at least two different transmission-channels 5a, 5b, and designed for transmitting at least two data-entities D1, D2 of the dataset D over the at least two different transmission-channels 5a, 5b, wherein each of said at least two data-entities D1, D2 is transmitted over a different one of said at least two different transmission-channels 5a, 5b (in other words, they follow each a different transmission path or a different transmission processing). The dataset-unit 3 here comprises a monitoring-unit 4 with the target-SIL T designed to monitor its environment and generating a dataset D comprising information about monitored issues. For example, the dataset-unit 3 could be designed for monitoring a railroad track 21 and comprises a wayside equipment (see figure 3).

The mobile-device 10 comprises a receiving-unit 12 designed for receiving multiple data-entities D1, D2 of a dataset D over different transmission-channels 5a, 5b, a comparison-unit 13 designed for cross-checking received data-entities D1, D2, wherein a cross check is positive in the case that the data-entities D1, D2 are checked to originate from the dataset D, an output-unit 14 (e.g. comprising a display) designed for outputting information based on a received data-entity D1, D2 of a dataset D after a positive cross-check, and, optionally, a sending-unit 11 designed for sending a control-dataset C from the mobile-device 10 to a receiving device (here not shown, see fig. 4).

Data is transmitted over both transmission-channels 5a, 5b of the transmission-system 5, wherein a copy D1 of the dataset D could be transmitted as data-entity D1 over the first transmission-channel 5a and a HASH-value of the dataset D could be transmitted as data-entity D2 over the second transmission-channel 5b. The comparison-unit 13 then calculates the HASH-value of the received copy D1 and compares it with the received HASH-value. Control-data C may be sent back in the same manner and be cross-checked by the comparison-unit 6 of the information-device 2. The transmitted data should be encrypted before transmission and decrypted after transmission. Therefore, the information-device 2 or the transmission-system 5 is designed for encrypting data-entities D1, D2 and the mobile-device 10 is designed to decrypt data-entities D1, D2 encrypted by the information-device 2 or the transmission-system 5.

The information-device 2 of the system 1 preferentially comprises two server-units 7, 8 having a SIL lower than the target-SIL and connected such that they can receive data (a dataset) from the dataset-unit 3 and send data (e.g. control data) to the dataset-unit 3. The information-device 2 also comprises a further comparison-unit 6 designed for cross-checking two control-datasets C sent by the sending-unit 11 of the mobile-device 10 after their reception by the information-device 2, and also designed to cross-check data sent from the server-units 7, 8 in order to enhance SIL. A human-machine-interface may be used to control at least one of the server-units 7.

Figure 3 shows an example for an application for a system according to the invention. Here a situation is outlined where workers (left side) work on a railroad track 21. They must be warned for incoming trains 20 to avoid the danger of an accident. To achieve that, the track is monitored with a monitoring device 4 of a system 1 according to the invention. At least when a train 20 arrives, the monitoring-unit 4 monitors this information and the dataset-unit 3 sends a dataset D (or better: data entities D1, D2) to a mobile device 10 to warn the workers. This all is only outlined here and actually happens as shown in figure 2.

Figure 4 shows an example for a method for transmitting data with a system 1 according to the invention (see figure 2).

In step I, a dataset D is provided to be transmitted from the information-device 2, especially from its dataset-unit 3. The dataset D concerns for instance the monitoring of a railroad track 21 as shown in figure 3.

In step II, there are sent two copies D1, D2 of this dataset D over the transmission-system 5 of the system 1 to the mobile device 10. As explained above, the transmission path or processing is notably different for the two copies.

In step III, the two copies D1, D2 are cross-checked by the comparison unit 6 after transmission, wherein a cross check is positive in the case that the data-entities D1, D2 are checked to originate from identical data.

In step IV the cross-check is positive and information of a data-entity D1, D2 of the dataset D (here information about an incoming train 20) is outputted by the output-unit 14 of the mobile-device 10.

The further two steps show the transmission of data from the mobile-device 10 to the information-device 2.

In step V, a control-dataset C is transmitted from the mobile-device 10 to the information-device 2, especially to its dataset-unit 3.

In step VI the information-device 2, especially its dataset-unit 3 is controlled with the control-data C transmitted from the mobile-device 10.

In order to enhance SIL, the procedure may also comprise two data-entities D1, D2, notably of the control dataset C, sent by the mobile-device 10 to the information-device 2, and cross checked by the information-device 2.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of" means "at least one". The mention of a "unit" or a "device" does not preclude the use of more than one unit or device. Independent of the grammatical term usage, individuals with male, female or other gender identities are included within the term.

### Reference Signs List

- 1: system
- 2: information-device
- 3: dataset-unit
- 4: monitoring-unit
- 5: transmission-system
- 5a: (first) transmission-channel
- 5b: (second) transmission-channel
- 6: comparison-unit
- 7: server-unit
- 8: server-unit
- 9: human-machine-interface
- 10: mobile-device
- 11: sending-unit
- 12: receiving-unit
- 13: comparison-unit
- 14: output-unit
- 20: train
- 21: track
- C: control-dataset
- D: dataset
- D1: data-entity / copy of the dataset
- D2: data-entity / copy of the dataset
- T: target-SIL

## Claims

1. A mobile-device (10) for data communication at a desired safety integrity level with components of a lower safety integrity level, the mobile-device (10) comprising:
- a receiving-unit (12) designed for receiving multiple data-entities (D1, D2) of a dataset (D) over different transmission-channels (5a, 5b),
- a comparison-unit (13) designed for cross-checking received data-entities (D1, D2), wherein a cross check is positive in the case that the data-entities (D1, D2) are checked to originate from the dataset (D),
- an output-unit (14) designed for outputting information based on a received data-entity (D1, D2) of a dataset (D) after a positive cross-check.

2. The mobile-device (10) according to claim 1, wherein the comparison-unit (13) is designed for cross-checking all received data-entities (D1, D2) of a dataset (D) by comparing data-entities (D1, D2), whether they originate from identical data or not, wherein in the case two data-entities (D1, D2) differ, it is decided that the target-SIL (T) is not reached, preferably wherein the comparison-unit (13) is designed for generating a HASH-value of a received copy (D1) and for comparing this generated HASH-value with at least one other HASH-value that has been received or generated from another received copy (D2).

3. The mobile-device (10) according to claim 1 or 2, designed for processing received data such that, in the case this data originates from wayside equipment of a railroad track (21) and comprises graphical data, said graphical data and text-data comprising information of the wayside equipment is output on the output-unit (14).

4. The mobile-device (10) according to one of the preceding claims, comprising a sending-unit (11) designed for sending a control-dataset (C) from the mobile-device (10) to a receiving device.

5. The mobile-device (10) according to claim 4, wherein the sending-unit (11) is designed for sending multiple data-entities of the control-dataset (C) over different transmission-channels (5a, 5b), especially the same transmission-channels (5a, 5b), that are connected with the receiving-unit (12).

6. The mobile-device (10) according to claim 4 or 5, designed for generating two identical control-datasets (C) with two different generation-routines and transmitting these two control-datasets (C) with the sending-unit (11), especially over two different transmission-channels (5a, 5b).

7. A system (1) for transmitting data at a desired safety integrity level with components of a lower safety integrity level, the system (1) comprising:
- a mobile-device (10) according to one of the claims 4 to 6,
- an information-device (2) comprising at least a dataset-unit (3) having a predefined target-SIL (T) and designed for providing datasets (D) to be transmitted to the mobile-device (10),
- a transmission-system (5) comprising at least two different transmission-channels (5a, 5b), and being designed for transmitting at least two data-entities (D1, D2) of datasets (D) over the at least two different transmission-channels (5a, 5b).

8. The system (1) according to claim 7, wherein the information-device (2) comprises a further comparison-unit (6) designed for cross-checking multiple data-entities (D1, D2), especially two control-datasets (C), sent by the sending-unit (11) of the mobile-device (10) after their transmission,
preferably wherein the further comparison-unit (6) is designed for cross-checking all received data-entities (D1, D2) of a control-dataset (C) by comparing the data-entities (D1, D2), whether they originate from identical data or not, wherein in the case two data-entities (D1, D2) differ, it is decided that the target-SIL (T) is not reached, particularly preferably wherein the further comparison-unit (6) is designed for generating a HASH-value of a received copy (D1) and for comparing this generated HASH-value with at least one other HASH-value that has been received or generated from another received copy (D2).

9. The system (1) according to claim 7 or 8, wherein the dataset-unit (3) comprises a monitoring-unit (4) with the target-SIL (T) designed to monitor its environment and generating a dataset (D) comprising information about monitored issues,
preferably wherein the dataset-unit (3) is designed for monitoring a railroad track (21) and/or comprises a wayside equipment.

10. The system (1) according to one of claims 7 to 9, designed such that a control-dataset (C) transmitted from the mobile-device (10) is used for controlling the information-device (2), especially the dataset-unit (3), especially for controlling the generation of datasets (D) by the dataset-unit (3).

11. The system (1) according to one of claims 7 to 10, wherein the information-device (2) or the transmission-system (5) is designed for encrypting data-entities (D1, D2) and the mobile-device (10) is designed to decrypt data-entities (D1, D2) encrypted by the information-device (2) or the transmission-system (5) and/or wherein the mobile-device (10) is designed for encrypting data-entities (D1, D2) and the information-device (2) or the transmission-system (5) is designed to decrypt data-entities (D1, D2) encrypted by the mobile-device (10).

12. A method for transmitting data with a system (1) according to one of claims 6 to 10, the method comprising the steps:
- providing a dataset (C, D) to be transmitted,
- transmitting at least one copy (D1) of this dataset (C, D) and another copy (D2) or a HASH-value of this dataset (D) as data-entities (D1, D2) over the transmission-system (5) of the system (1),
- cross-checking the data-entities (D1, D2) after transmission, wherein a cross check is positive in the case that the data-entities (D1, D2) are checked to originate from identical data,
- if the cross-check is positive: outputting information of a data-entity (D1, D2) of the dataset (C, D).

13. The method according to claim 12, wherein data-entities (D1, D2) of a dataset (D) are sent to the mobile-device (10) and cross-checked by the mobile-device (10) and/or data-entities (D1, D2) of a control-dataset (C) are sent from the mobile-device (10) and preferably cross-checked by a further comparison-unit (6).

14. The method according to claim 12 or 13, wherein the dataset-unit (3) of the system (1) monitors the existence of a train (20) at a predefined position of a railroad track (21), comprising the steps:
- generating a dataset (D) comprising information about the existence of a train (20) at the predefined position of the railroad track (21),
- transmitting at least one copy (D1) of this dataset (D) and another copy (D2) of this dataset (D) or a HASH-value of the dataset (D) as data-entities (D1, D2) to the mobile-device (10),
- cross checking the received data-entities (D1, D2) by the mobile-device (10),
- in the case of a positive cross-check: displaying information based on the received data-entities (D1, D2) on the mobile-device (10),
preferably comprising the steps:
- transmitting a control-dataset (C) from the mobile-device (10) to the dataset-unit (3)
- controlling the dataset-unit (3) with data transmitted from the mobile-device (10) to the dataset-unit (3).
